# EUROPEAN PATENT APPLICATION

(11) **EP 1 441 202 A2**
(43) Date of publication of application: **28.07.2004**
(21) Application number: 04001367.4
(22) Date of filing: 22.01.2004
(51) Int. Cl.: G01C 21/36

(54) **Image information display apparatus**

(30) Priority: 23.01.2003 JP 2003015016
(71) Applicant: ALPS ELECTRIC CO., LTD., Tokyo 145-8501 (JP)
(72) Inventor: Nonaka, Kaiji, Alps Electric Co., Ltd., Tokyo 145-8501 (JP)
(74) Representative: Klunker . Schmitt-Nilson . Hirsch

(57) **Abstract**

An image information display apparatus is provided, which is inexpensive and is capable of easily performing scrolling of image data from a current position to a destination. The image information display apparatus includes a map data storage unit 1, a display unit 2, an input unit 3, a control unit 4, and a communication satellite 5. The input unit includes a manipulation unit 22 manipulated by an operator, position sensors 25, 26 for detecting a manipulation states of the manipulation unit 22, actuators 23, 24 for supplying a force-feedback to the manipulation unit 22, and destination setting switches 27, 28. The control unit 4 calculates an amount and direction of manipulation of the manipulation unit 22 on the basis of positional signals a, b, and performs scrolling of image data 51 on the basis of the calculated amount and direction of manipulation of the manipulation unit 22 obtained. In addition, the control unit calculates the deviation between the direction of a destination B as seen from a reference point A in the road map data 51 and the direction of manipulation of the manipulation unit 22, and controls drive of the actuator 23, 24 to decrease the force-feedback to be supplied to the manipulation unit 22 with a decrease in the calculated deviation.

## Description

### BACKGROUND OF THE INVENTION

### 1. Field of the Invention

The present invention relates to an image information display apparatus comprising a force-feedback supply type input device, and specifically to means for facilitating scrolling of image data displayed on a display screen.

### 2. Description of the Related Art

During the use of an image information display apparatus such as a vehicle-mounted navigation apparatus, etc., in a case where a destination is set at one point in map data which is outside the area of the display screen in which the current position is displayed, it may be intended that the map data is scrolled from the display screen of the current position to the display screen of the destination so as to confirm a route or spots around the route from the current position to the destination.

Conventionally, this kind of image information display apparatus comprises, as an input device for scrolling the map data, a force-feedback supply type input device for supplying a manipulation unit manipulated by an operator with the appropriate force-feedback corresponding to its manipulation state, or an input device for performing only scrolling of the map data without supplying a force-feedback to a manipulation unit. An image information display apparatus comprising the force-feedback supply type input device is suggested, wherein the scrolling of the map data can be easily performed in only a direction following the roads on a display screen, but the manipulation unit is supplied with a large resistance when the map data is scrolled in directions departing from the roads.

In addition, as the input device, there was conventionally known a so-called joystick type input device constructed such that a manipulation unit can be rocked in any direction from a neutral position (for example, see Japanese Unexamined Patent Application Publication No. 2001-84875 (Fig. 3)).

When the joystick type input device is provided in the image information display apparatus, since the map data can be scrolled in any direction from a display screen in which a current position is displayed corresponding to the direction of rocking of the manipulation unit, it is possible to easily perform the scrolling of the map data.

Nonetheless, in the image information display apparatus comprising an input device for performing only the scrolling of the map data without supplying force-feedback to the manipulation unit, since the force-feedback for assisting the scrolling of the map data from the current position to a destination is not supplied to the manipulation unit, it was difficult to match the manipulation direction of the manipulation unit with a direction toward the destination in the map data as seen from the current position, and to adjust the amount of manipulation of the manipulation unit corresponding to variation of a distance to the destination in the map data. Therefore, an operator must manipulate carefully the manipulation unit by an appropriate amount of manipulation in an appropriate direction of manipulation while paying careful attention to the display screen, so that there is a problem that a heavy burden is imposed on the operator.

On the other hand, in the image information display apparatus comprising the force-feedback supply type input device to be capable of easily scrolling the map data only in a direction following the roads in the display screen, the scrolling of the map data from the current position to a destination can be easily performed to a certain extent compared with a case where the input device not supplying a force-feedback to the manipulation unit is employed. However, since the map data cannot be scrolled linearly from a current position to a destination, and a restriction is not applied as long as the scrolling follows roads even if the map data is scrolled in a wrong direction as seen from the destination, there is a problem that the scrolling of the map data cannot always be performed efficiently. Further, since the road data must be added as auxiliary data to the map data in order to implement the force-feedback supply type input device, the data size is enlarged, imposing a heavy burden on development of the map data, and since calculation of the force-feedback is complicated due to curves or windings of roads, a high-performance microcomputer is required, so that there is a problem in that cost for the image information display apparatus is increased.

### SUMMARY OF THE INVENTION

The present invention is contrived to solve the conventional problems, and it is thus an object of the present invention to provide an image information display apparatus, which is inexpensive and is capable of easily performing scrolling of map data from a current position to a destination.

In order to accomplish the above object, the present invention provides an image information display apparatus comprising: a display unit for displaying image data; an input unit for performing scrolling of the image data displayed on the display unit; and a control unit for controlling the display unit and the input unit, wherein the input unit has a manipulation unit manipulated by an operator, a position sensor for detecting a manipulation state of the manipulation unit, and an actuator for supplying force-feedback to the manipulation unit, and the image data includes a prescribed point. Here, the control unit calculates the amount and direction of manipulation of the manipulation unit on the basis of positional signals output from the position sensor, and performs the scrolling of the image data on the basis of the amount and direction of manipulation of the manipulation unit obtained. In addition, in the course of scrolling the image data, the control unit calculates the deviation between a direction from a reference point in the display unit to the prescribed point in the image data and the direction of manipulation of the manipulation unit, and controls drive of the actuator to decrease the force-feedback to be supplied to the manipulation unit with a decrease in the calculated deviation.

Therefore, by employing a force-feedback supply type input unit and controlling the drive of the actuator to reduce the force-feedback to be supplied to the manipulation unit with a decrease of the deviation between the direction from the reference point in the display unit to the prescribed point in the image data and the direction of manipulation of the manipulation unit in the course of scrolling the image data, since the image data can be substantially straightly scrolled from a reference point to a prescribed point, it is possible to enhance the efficiency of the scrolling of the image data, and to enhance a manipulation property of the image information display apparatus. Further, since specific auxiliary data need not be added to the image data, development of the image data can be facilitated, and since the image data is substantially straightly scrolled from the reference point to the prescribed point, calculation of the force-feedback supplied to the manipulation unit can be simplified, so that it is possible to accomplish a low-grade control unit and a low-cost image information display apparatus.

Furthermore, in the image information display apparatus according to the present invention, the control unit may calculate a distance from a reference point in the image data corresponding to the reference point in the display unit to the prescribed point, and may control the drive of the actuator to supply to the manipulation unit an appropriate force-feedback corresponding to the calculated distance, in the course of scrolling the image data.

In this way, by controlling the drive of the actuator to supply to the manipulation unit an appropriate force-feedback corresponding to the distance from the reference point in the image data to the prescribed point, a notice, for example, that the prescribed point comes near or that the prescribed point is displayed on a display screen, etc. can be given to the operator, so that the operator can increase or decrease the amount of manipulation of the manipulation unit in accordance with the notice and rapidly display the prescribed point in the display screen. As a result, since the scrolling manipulation is not unnecessarily performed, it is possible to further enhance the manipulation property of the image information display apparatus.

Furthermore, in the image information display apparatus according to the present invention, the control unit may calculate the variation of a distance from a reference point in the image data corresponding to the reference point in the display unit to the prescribed point and control the drive of the actuator to supply to the manipulation unit an appropriate force-feedback corresponding to the obtained variation of distance, in the course of scrolling the image data.

In this way, since the drive of the actuator is controlled to supply to the manipulation unit an appropriate force-feedback corresponding to the variation of the distance from the reference point in the image data to the prescribed point, a notice of a correct direction of manipulation of the manipulation unit can be given to the operator, by varying the force-feedback to be supplied to the manipulation unit, for example, when the image data is scrolled in a direction approaching the prescribed point and when the image data is scrolled in a direction separated away from the prescribed point, so that the scrolling manipulation is not unnecessarily performed, and it is thus possible to further enhance the manipulation property of the image information display apparatus.

Furthermore, in the image information display apparatus according to the present invention, the image data may be the map data, and the prescribed point may be a destination specified by the operator.

In this way, since the image information display apparatus displaying the map data as the image data and specifying a destination as the prescribed point can scroll the map data along a route from the current position to the destination position, the image information display apparatus can be used as a car-mounted or portable navigation apparatus, a game machine or an electronic commercial transaction apparatus.

Furthermore, in the image information display apparatus according to the present invention, the map data may be road image data expressed two-dimensionally or three-dimensionally.

In this way, since the image information display apparatus, in which the map data is road image data expressed two-dimensionally or three-dimensionally, can be used as a car-mounted or portable navigation apparatus, it is possible to smoothly conduct movement of the operator to the destination.

Furthermore, in the image information display apparatus according to the present invention, the map data may be virtual space data expressed two-dimensionally or three-dimensionally.

In this way, since the image information display apparatus, in which the map data is virtual reality data expressed two-dimensionally or three-dimensionally, can be used as a game machine or an electronic commercial transaction apparatus, it is possible to smoothly conduct movement of a character displayed on the display screen to the destination.

### BRIEF DESCRIPTION OF THE DRAWINGS

Fig. 1 is a diagram illustrating a construction of an image information display apparatus according to an embodiment of the present invention;
Fig. 2 is a cross-sectional view of an input unit according to the embodiment as seen from a lateral side;
Fig. 3 is a cross-sectional view of the input unit according to the embodiment as seen from a top side;
Fig. 4 is a block diagram illustrating a construction of a force-feedback control unit according to the embodiment;
Figs. 5A to 5C are graphs exemplifying force-feedbacks supplied to a manipulation unit according to the embodiment;
Fig. 6 is a flowchart illustrating operational steps of the image information display apparatus according to the embodiment; and
Fig. 7 is an exemplary diagram illustrating the relationship between a display screen of a display unit and image data in which a destination is displayed according to the embodiment.

### DESCRIPTION OF THE PREFERRED EMBODIMENTS

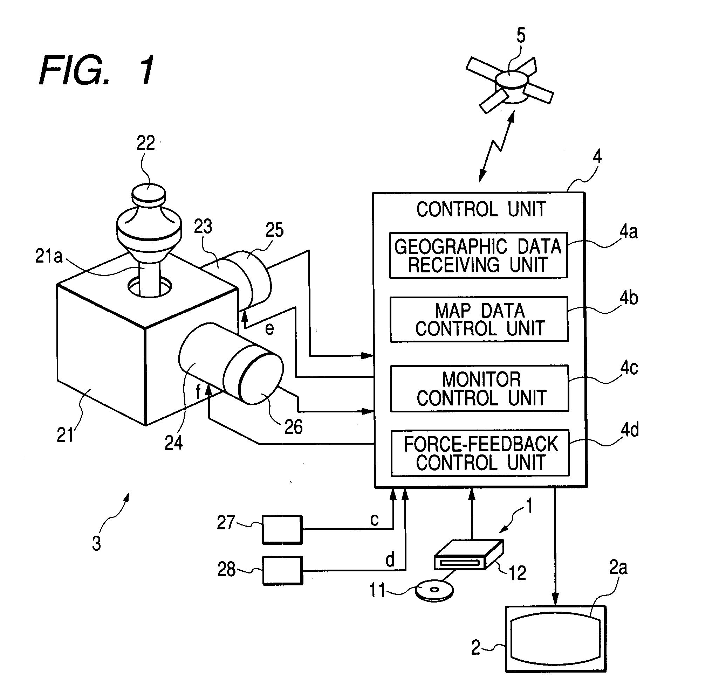

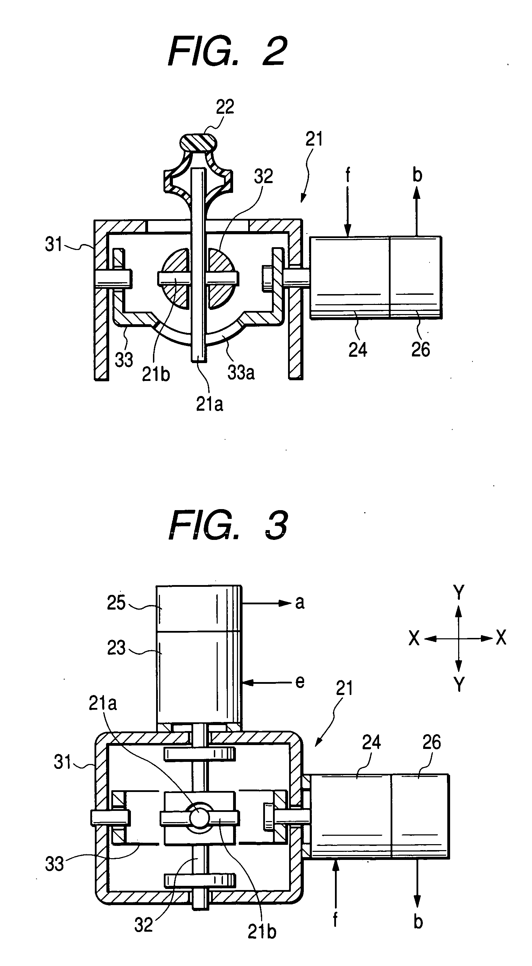

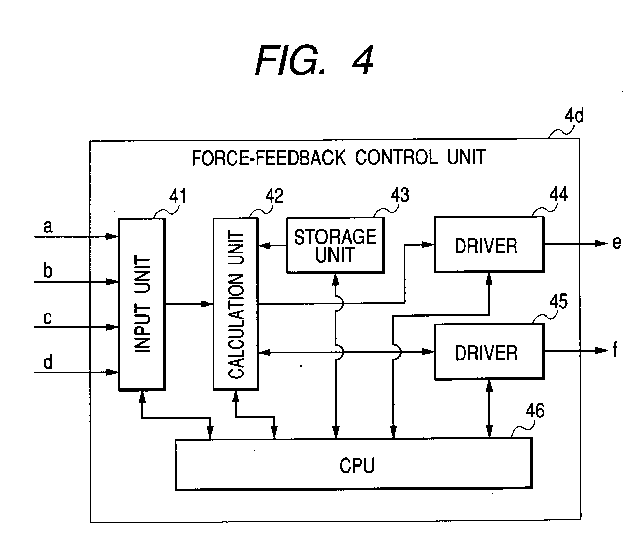

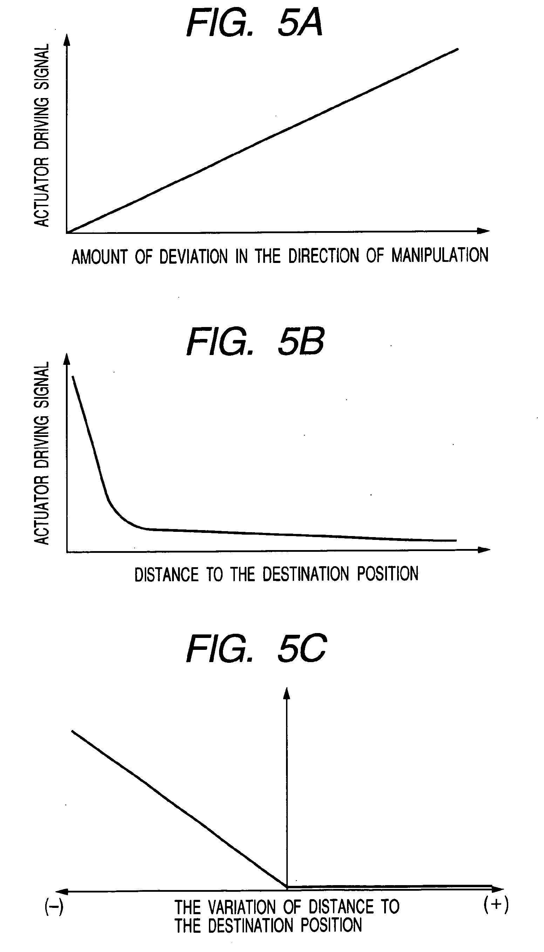

An embodiment of an image information display apparatus according to the present invention will be described with reference to Figs. 1 to 5. Fig. 1 is a diagram illustrating a construction of an image information display apparatus according to an embodiment of the present invention, Fig. 2 is a cross-sectional view of an input unit according to the embodiment as seen from a lateral side, Fig. 3 is a cross-sectional view of the input unit according to the embodiment as seen from a top side, Fig. 4 is a block diagram illustrating a construction of a force-feedback control unit according to the embodiment, and Figs. 5A to 5C are graphs exemplifying force-feedbacks supplied to a manipulation unit according to the embodiment.

As shown in Fig. 1, an image information display apparatus according to this embodiment comprises a map data storage unit 1, a display unit 2 for displaying map data (image data) read from the map data storage unit 1 and a cursor, an input unit 3 for performing scrolling of the map data displayed in the display unit 2, movement of the cursor and setting of a destination (a prescribed point), a control unit 4 for controlling the map data storage unit 1, the display unit 2 and the input unit 3, and a communication satellite 5 for displaying a current position in the display unit 2 through the control unit 4.

The map data storage unit 1 includes an information storage medium 11, such as CD-ROM or the like, storing road map data (map data) to be expressed two-dimensionally or three-dimensionally, and a drive unit 12 for reading the road map data from the information storage medium 11.

Although well known display device can be used as the display unit 2, a liquid crystal display device can be preferably used because it can be manufactured at relatively low cost in a small size.

As shown in Fig. 1, the input unit 3 comprises a mechanism unit 21 having a rocking lever 21a, a manipulation unit 22 provided at the front end portion of the rocking lever 21a, first and second actuators 23, 24 for supplying a force-feedback to the manipulation unit 22 through the rocking lever 21a, first and second position sensors 25, 26 for detecting the manipulation direction and the manipulation amount of the rocking lever 21a, a start switch 27, and a destination setting switch 28.

The mechanism unit 21, as shown in Figs. 2 and 3, comprises the rocking lever 21a, a case 31, and a lever holding shaft 32 and a swing arm 33 held rotatably in the case 31. The lever holding shaft 32 and the swing arm 33 are arranged to be perpendicular to each other, and the lever holding shaft 32 is provided with the rocking lever 21a to be rotatable in only the rotational direction of the swing arm 33. Further, a reference numeral 21b in the drawing denotes a rocking central shaft of the rocking lever 21a. On the other hand, a long groove 33a is formed in the swing arm 33, and the lower end portion of the rocking lever 21a passes through the long groove. The width of the long groove 33a is slightly larger than the diameter of the lower end portion of the rocking lever 21a. Accordingly, when the rocking lever 21a is rocked in a rocking direction (the X-X direction) accompanying a rotation of the lever holding shaft 32, the lower end portion of the rocking lever 21a can be freely rocked within the long groove 33a, and when the rocking lever 21a is rocked in a rocking direction (the Y-Y direction) accompanying a rotation of the rocking central shaft 21b, the swing arm 33 can be rocked integrally with the rocking lever 21a.

Accordingly, the rocking lever 21a can be rocked in any direction centered on the lever holding shaft 32 and the rocking central shaft 21b. Then, the lever holding shaft 32 is rotated in the rocking direction of the rocking lever 21a by an amount of rotation proportional to the amount of rocking of the rocking lever 21a in the X-X direction, and the swing arm 33 is rotated in the rocking direction of the rocking lever 21a by an amount of rotation proportional to the amount of rocking of the rocking lever 21a in the Y-Y direction.

The manipulation unit 22 is formed to have a shape and a size with which an operator can easily manipulate the manipulation unit.

The first actuator 23 is connected to the lever holding shaft 32, and the second actuator 24 is connected to the swing arm 33. An electromotor such as a motor or a solenoid can be used for the first and second actuators 23, 24. In a case where a direct motor such as a linear motor or a solenoid is used for the actuators 23, 24, proper gear mechanisms for converting a rotational motion of the lever holding shaft 32 or the swing arm 33 into a linear motion to deliver it are provided between the actuator 23 and the lever holding shaft 32 or between the actuator 24 and the swing arm 33.

The first and second position sensors 25, 26 detect a direction of rotation and an amount of rotation of rotational shafts, and convert them into electrical signals to output them. For example, a rotary encoder or a rotary variable resistor can be used for the position sensors. The rotational shaft of the first position sensor 25 is connected to the lever holding shaft 32, and the rotational shaft of the second position sensor 26 is connected to the swing arm 33.

Push switches are used as the start switch 27 and the destination setting switch 28. The respective switches 27, 28 can be provided at any position, but in order to enhance the manipulation property thereof, it is preferable that the switches be provided to be built into the manipulation unit 22 and to expose manipulation knobs thereof from a surface of the manipulation unit 22. Furthermore, in place of individually providing the switches 27, 28, a multi-directional switch also may be used.

The control unit 4, as shown in Fig. 1, comprises a geographic data receiving unit 4a for receiving geographic data from the communication satellite 5, an image data control unit 4b for controlling the start and stop of the image data storage unit 1 and the reading of the image data from the image data storage unit 1, a monitor control unit 4c controlling the start and stop of the display unit 2, the display of the image data, the cursor, the current position and the destination position in the display unit 2, and the setting of the reference point in the display screen, and a force-feedback control unit 4d for controlling the force-feedback to be supplied to the manipulation unit 22.

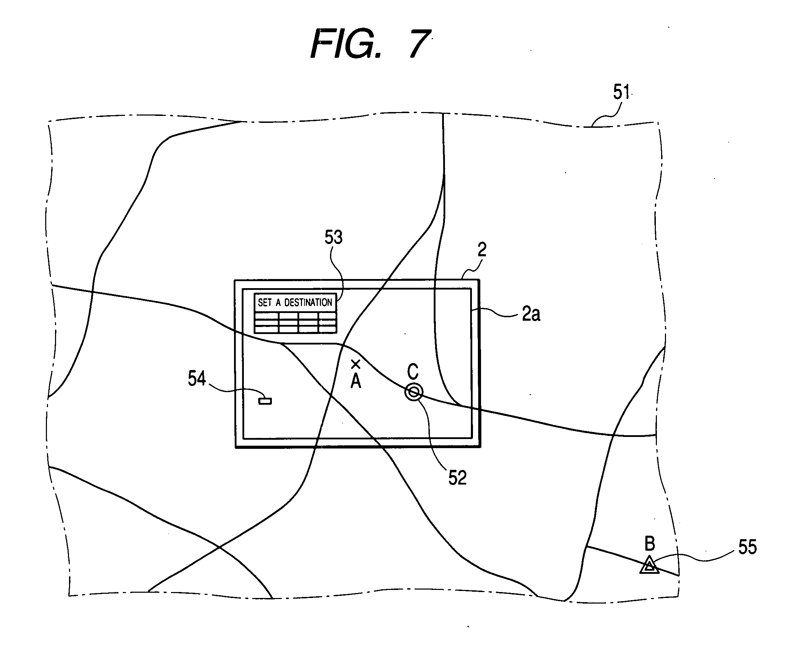

The reference point A of the display screen can be set at any position in the display screen, but in this embodiment, as shown in Fig. 7, is set at the center of the display screen 2a. Since the geographic data receiving unit 4a, the image data control unit 4b and the monitor control unit 4c are well known and are not a gist of the present invention, description thereof will be omitted.

The force-feedback control unit 4d, as shown in Fig. 4, comprises an input unit 41 for receiving a first positional signal a to be output from the first position sensor 25, a second positional signal b to be output from the second position sensor 26, a first switch signal c to be output from the start switch 27 and a second switch signal d to be output from the destination setting switch 28, a calculation unit 42 for calculating the direction of movement and the amount of movement of the image data or the cursor on the basis of the first positional signal a and the second positional signal b and calculating driving signals of the first and second actuators 23, 24 for supplying a proper force-feedback to the manipulation unit 22, a storage unit 43 for storing numerical formulas and coefficients supporting the calculations, driver circuits 44, 45 for outputting driving powers e, f corresponding to the driving signals output from the calculation unit 42 to drive the first and second actuators 23, 24, and a CPU 46 for controlling the respective units 41 to 45.

The calculation unit 42 performs the following calculations about the force-feedback to be supplied to the manipulation unit 22 on the basis of the numerical formulas and the coefficients stored in the storage unit 43.
(1) Calculation of the direction (see Fig. 7) of the destination position B as seen from the reference point A in the road map data displayed in the display unit 2.
(2) Calculation of the deviation between the direction of the destination position B as seen from the reference point A and the direction of manipulation of the manipulation unit 22.
(3) Calculation of the actuator driving signals corresponding to the obtained amount of deviation.
   Fig. 5A is a graph illustrating the relationship between the amount of deviation obtained through the above calculations and the actuator driving signals. In this embodiment, actuator driving signals proportional to the amount of deviation are output from the control unit
   4. Accordingly, since the operator can feel the direction of the destination position B in the road map data 51, the operator can rapidly scroll the road map data 51 in the direction of the destination position B.
(4) Calculation of the distance (see Fig. 7) from the reference point A in the road map data 51 displayed in the display unit 2 to the destination position B.
(5) Calculation of the actuator driving signals corresponding to the obtained distance.
   Fig. 5B is a graph illustrating the relationship between the distance obtained through the above calculations and the actuator driving signals. In this embodiment, when the destination position B is located within a predetermined distance, the actuator driving signals inversely proportional to the distance are output from the control unit 4. Accordingly, since the operator can feel the location of the destination position B in the road map data 51, the operator can smoothly scroll the road map data 51 to the destination position B.
(6) Calculation of the variation of the distance (see Fig. 7) from the reference point A in the road map data 51 displayed in the display unit 2 to the destination position B.
(7) Calculation of the actuator driving signals corresponding to the obtained variation of the distance.

Fig. 5C is a graph illustrating the relationship between the variation of distance obtained through the above calculations and the actuator driving signals. In this embodiment, when the manipulation unit 22 is manipulated in a direction approaching the destination position B, that is, when the variation of distance from the reference point A to the destination position B represents minus, the actuator driving signals are not output from the control unit 4, and when the manipulation unit 22 is manipulated in a direction separated away from the destination position B, that is, when the variation of distance from the reference point A to the destination position B represents plus, the actuator driving signals proportional to the variation of distance are output from the control unit 4. As a result, since the operator can avoid the scrolling of the road map data 51 in a wrong direction, the operator can rapidly scroll the road map data 51 in the direction toward destination position B.

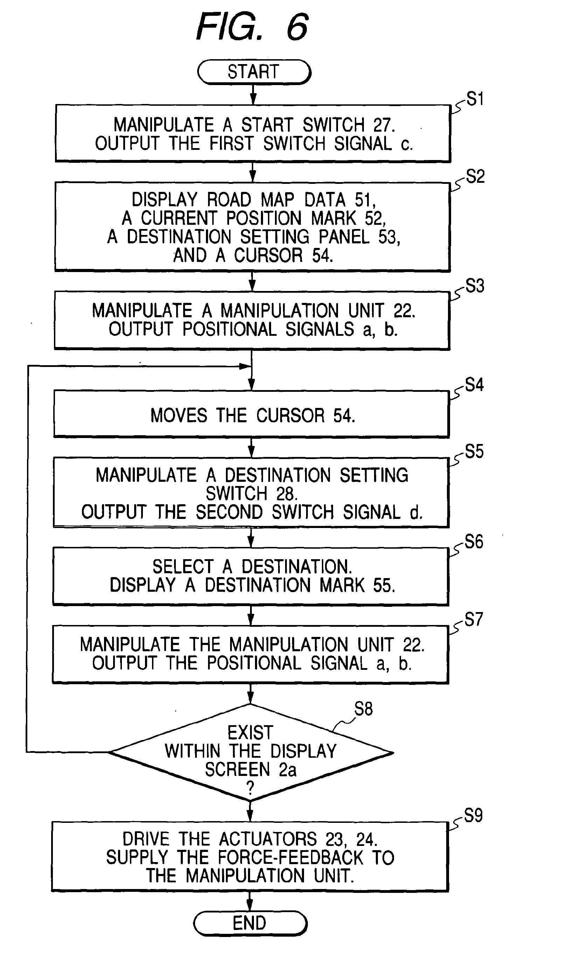

Next, operation of the image information display apparatus according to this embodiment will be described with reference to Figs. 6 and 7. Fig. 6 is a flowchart illustrating operational steps of the image information display apparatus according to the embodiment, and Fig. 7 is an exemplary diagram illustrating the relationship between the display screen of the display unit and the road map data in which the destination is displayed according to the embodiment.

When the start switch 27 is manipulated by an operator and the first switch signal c is output from the start switch 27 (step S1), the control unit 4 starts the display unit 2 and the input unit 3 on the basis of the switch signal c, and as shown in Fig. 7, displays a current position mark 52 marked at the current position C, a destination setting panel 53 and the cursor 54 in the display screen 2a of the display unit 2 on the basis of the road image data 51 including the current position and the geographic data transmitted from the communication satellite (step S2). The road map data 51 includes, as schematically shown in Fig. 7, specific regions, for example, Japanese national road maps, as well as the region displayed in the display screen 2a, and a ten-key, etc. for inputting a look of address or a phone number included in the road map data 51 is displayed in the destination setting panel 53.

From this state, when the manipulation unit 22 is manipulated by the operator and the first and second positional signals a, b are output from the first and second position sensors 25, 26 (step S3), the control unit 4 calculates a direction of movement and an amount of movement of the cursor 54 on the basis of the positional signals a, b, and then moves the cursor 54 to the position corresponding to the positional signals a, b (step S4). As a result, the cursor 54 can be moved to a desired position in the destination setting panel 53. After the cursor 54 has been moved to the desired position in the destination setting panel 53, when the destination setting switch 28 is manipulated by the operator and then the second switch signal d is output from the destination setting switch 28 (step S5), the control unit 4 selects a destination on the basis of the first and second positional signals a, b, and the second switch signal d, and displays a destination mark 55 representing the selected destination position B in the road image data 51 (step S6). For example, in a case where the lookup of an address is displayed in the destination setting panel 53, the destination position B can be set by moving the cursor 54 to a desired position in the destination setting panel 53 and then manipulating the destination setting switch 28. In addition, in a case where the ten-key is displayed in the destination setting panel 53, the destination position B can be set through specification of a phone number by repeating the movement of the cursor 54 and the manipulation of the destination setting switch 28.

After setting the destination position B, when the manipulation unit 22 is manipulated by the operator and the first and second positional signals a, b are output from the first and second positional sensors 25, 26 (step S7), the control unit 4 calculates a movement position of the cursor 54 on the basis of the positional signals a, b, and determines whether the movement position is within the display screen 2a or not (step S8). When it is determined in the step S8 that the movement position of the cursor 54 is within the road map data 51 displayed in the display screen 2a, the control unit 4 does not output the driving signals of the actuators 23, 24, and the actuators 23, 24 are thus maintained in a stop state. Therefore, the force-feedback is not supplied to the manipulation unit 22, and the operator can freely move the cursor 54 within the display screen 2a. On the other hand, when it is determined in the step S8 that the movement position of the cursor 54 exceeds the display screen 2a, the control unit 4 controls the image data storage unit 1 and the display unit 2 to scroll the road map data 51 by the amount of manipulation of the manipulation unit 22 in a direction corresponding to the direction of manipulation of the manipulation unit 22, and outputs the driving signals of the actuators 23, 24 corresponding to the direction and amount of manipulation of the manipulation unit 22 to supply an appropriate force-feedback to the manipulation unit 22 (step S9). The supply of force-feedback is performed by repeating the aforementioned calculations (1) to (7) in the calculation unit 42.

The image information display apparatus according to the embodiment comprises a force-feedback supply type input unit 3, and controls the drive of the actuators 23, 24 to decrease the force-feedback to be supplied to the manipulation unit 22 with a decrease in the deviation between the direction of the destination position B as seen from the reference point in the road map data 51 corresponding to the reference point A in the display screen 2a and the direction of manipulation of the manipulation unit 22 in the course of scrolling the road map data 51. As a result, the road map data 51 can be substantially straightly scrolled from the current position C to the destination position B, so that it is possible to enhance scrolling efficiency of the road map data 51. Further, since specific auxiliary data need not be added to the road map data 51, development of the road map data 51 can be facilitated, and since the road map data 51 is substantially straightly scrolled from the current position C to the destination position B, calculation of the force-feedback supplied to the manipulation unit 22 can be simplified, so that it is possible to accomplish a low grade of the control unit 4 and also a low cost of the image information display apparatus.

Further, in the image information display apparatus according to this embodiment, since the drive of the actuators 23, 24 are controlled to supply the manipulation unit 22 with an appropriate force-feedback in accordance with the distance from the reference point in the road map data 51 corresponding to the reference point A in the display screen 2a to the destination position B, a notice, for example, that the destination position B comes near or that the destination position B is displayed in the display screen 2a, etc. can be given to the operator, so that the operator can decrease the amount of manipulation of the manipulation unit 22 in accordance with the notice and rapidly display the destination position B in the display screen 2a. As a result, the scrolling manipulation is not unnecessarily performed, thereby further enhancing the manipulation property of the image information display apparatus.

Furthermore, in the image information display apparatus according to this embodiment, since the drive of the actuators 23, 24 is controlled to supply the manipulation unit 22 with an appropriate force-feedback corresponding to the variation of distance from the reference point in the road map data 51 corresponding to the reference point A in the display screen 2a to the destination position B, a notice of a correct direction of manipulation of the manipulation unit 22 can be given to the operator, by varying the force-feedback to be supplied to the manipulation unit 22, for example, when the road map data 51 is scrolled in a direction approaching the destination position B and when the road map data 51 is scrolled in a direction separated away from the destination position B, so that the scrolling manipulation is not unnecessarily performed, and it is thus possible to further enhance the manipulation property of the image information display apparatus.

In the image information display apparatus according to this embodiment, since the road image data 51 expressed two-dimensionally or three-dimensionally is displayed as the image data in the display unit 2, it can be used for a car-mounted or portable navigation apparatus, so that it is possible to smoothly perform movement to a desired destination specified by the operator.

Furthermore, in the above embodiment, the image information display apparatus using a switch input method in which the setting of the destination position B is performed through the manipulation of the manipulation unit 22 and the manipulation of the destination setting switch 28 has been described as an example, but an image information display apparatus using a voice input method comprises a microphone in place of the destination setting switch 28. Furthermore, in the image information display apparatus using a voice input method, the mark of the cursor 54 in the display screen 2a can be omitted.

Furthermore, in the aforementioned embodiment, the navigation apparatus in which road map data 51 is displayed in the display unit 2 has been described as an example, but the image information display apparatus according to the present invention may be applied to a game machine or an electronic commercial transaction apparatus for moving a character displayed in the display screen to a desired destination, by displaying virtual space data expressed two-dimensionally or three-dimensionally in the display unit 2.

As described above, the image information display apparatus according to the present invention comprises a force-feedback supply type input unit, and controls the drive of the actuator to decrease a force-feedback to be supplied to the manipulation unit with a decrease of the deviation between the direction from the reference point in the display unit to the prescribed point in the image data and the direction of manipulation of the manipulation unit in the course of scrolling the image data. As a result, the image data can be substantially straightly scrolled from the reference point to the prescribed point, so that it is possible to enhance efficiency of the scrolling of the image data. Further, since specific auxiliary data need not be added to the image data, development of the image data can be facilitated, and since the image data is substantially straightly scrolled from the reference point to the prescribed point, calculation of the force-feedback supplied to the manipulation unit can be simplified, so that it is possible to accomplish a low-grade control unit and a low-cost image information display apparatus.

## Claims

1. An image information display apparatus comprising: a display unit for displaying image data; an input unit for performing scrolling of the image data displayed on the display unit; and a control unit for controlling the display unit and the input unit,
wherein the input unit has a manipulation unit manipulated by an operator, a position sensor for detecting a manipulation state of the manipulation unit, and an actuator for supplying force-feedback to the manipulation unit,
wherein the image data includes a prescribed point,
wherein the control unit calculates an amount and direction of manipulation of the manipulation unit on the basis of positional signals output from the position sensor, and performs the scrolling of the image data on the basis of the amount and direction of manipulation of the manipulation unit obtained, and
wherein in the course of scrolling the image data, the control unit calculates the deviation between a direction from a reference point in the display unit to the prescribed point in the image data and the direction of manipulation of the manipulation unit, and controls drive of the actuator to decrease the force-feedback to be supplied to the manipulation unit with a decrease in the calculated deviation.

2. The image information display apparatus according to Claim 1, wherein in the course of scrolling the image data, the control unit calculates a distance from a reference point in the image data corresponding to the reference point in the display unit to the prescribed point, and controls the drive of the actuator to supply to the manipulation unit an appropriate force-feedback corresponding to the calculated distance to the prescribed point.

3. The image information display apparatus according to Claim 1 or 2, wherein in the course of scrolling the image data, the control unit calculates the variation of a distance from a reference point in the image data corresponding to the reference point in the display unit to the prescribed point, and controls the drive of the actuator to supply to the manipulation unit an appropriate force-feedback corresponding to the calculated variation of the distance to the prescribed point.

4. The image information display apparatus according to any of Claims 1 to 3, wherein the image data is map data, and the prescribed point is a destination specified by the operator.

5. The image information display apparatus according to Claim 4, wherein the map data is road image data expressed two-dimensionally or three-dimensionally.

6. The image information display apparatus according to claim 4, wherein the map data is virtual space data expressed two-dimensionally or three-dimensionally.
